# EUROPÄISCHE PATENTANMELDUNG

(11) **EP 1 418 069 A1**
(43) Veröffentlichungstag der Anmeldung: **12.05.2004**
(21) Anmeldenummer: 03012008.3
(22) Anmeldetag: 28.05.2003
(51) Int. Cl.: B60H 1/00

(54) **Verstellklappe für Heizungs-, Lüftungs- und Klimaanlagen**

(30) Priorität: 09.11.2002 DE 10252182
(71) Anmelder: GearCon GmbH, 72070 Tübingen (DE)
(72) Erfinder: Saysette-Rasmussen, Frank, 5300 Kerteminde (DK); Breuninger, Steffen, 72072 Tübingen (DE)
(74) Vertreter: Möbus, Daniela, Dr.-Ing.

(57) **Zusammenfassung**

Eine Verstellklappe (10) für Heizungs-, Lüftungs- und Klimaanlagen, insbesondere für Kraftfahrzeuge, mit einem Stellantrieb (15), der in die Verstellklappe (10) integriert ist, wobei der Klappenkörper (14) eine fensterartige Aussparung (13) aufweist, in die der Stellantrieb (15) einsetzbar ist.

## Beschreibung

Die Erfindung betrifft eine Verstellklappe für Heizungs-, Lüftungs- und Klimaanlagen, insbesondere für Kraftfahrzeuge, mit einem Stellantrieb, der in die Verstellklappe integriert ist.

Eine solche Verstellklappe ist beispielsweise aus dem deutschen Patent DE 100 04 795 Cl bekannt. Die in dieser Patentschrift beschriebene Klappe weist eine Hohlwelle auf, die Teil des Abtriebsrades eines in ihr angeordneten Getriebemotors ist. Bei der bekannten Verstellklappe ist jedoch die Montage und der Austausch des Antriebes relativ kompliziert. Eine Blindmontage des Stellantriebs ist keinesfalls möglich. Außerdem ist auch die Ausstattung der Klappe mit einer Hohlwelle spritztechnisch relativ aufwendig, wenn die Klappe als Kunststoffspritzgießteil hergestellt wird. Die Klappe wird daher in aller Regel aus zwei Teilen gefertigt.

Der vorliegenden Erfindung liegt die Aufgabe zugrunde, eine Verstellklappe mit integriertem Stellantrieb derart weiterzubilden, dass die Montage des Stellantriebs in der Klappe sowie die Herstellung der Klappe selbst vereinfacht sind.

Die Aufgabe wird mit einer Verstellklappe für Heizungs-, Lüftungs- und Klimaanlagen, insbesondere für Kraftfahrzeuge, mit einem Stellantrieb gelöst, der in die Verstellklappe integriert ist, wobei der Klappenkörper eine fensterartige Aussparung aufweist, in die der Stellantrieb einsetzbar ist. Die Herstellung des Klappenkörpers mit einem fensterartigen Ausschnitt ist einfacher als die Herstellung einer Klappe mit einer Hohlwelle. Dennoch weist eine Klappe mit einem fensterartigen Ausschnitt genügend Stabilität auf, da die Aussparung auf vier Seiten vom Klappenkörper umgeben ist.

Vorzugsweise kann der Stellantrieb in einem separaten, in die Aussparung einsetzbaren Gehäuse angeordnet sein. Das Gehäuse kann neben einem Motor auch ein Getriebe und ggf. auch eine Positionierelektronik des Motors und/oder eine Buselektronik enthalten.

Bei einer bevorzugten Ausgestaltung kann der Stellantrieb in die Aussparung eingerastet werden. Damit ist eine Blindmontage möglich.

Vorzugsweise kann die Aussparung so gestaltet sein, dass der Stellantrieb von der Klappenober- oder Klappenunterseite her in die Aussparung einsetzbar ist. Es ist jedoch auch möglich, die Klappe so zu gestalten, dass der Stellantrieb von der Stirnseite der Klappe her in die fensterartige Aussparung einsetzbar ist. Dies ist dann wichtig, wenn die Klappenoberflächen nicht frei zugänglich sind. In beiden Fällen ist jedoch eine leichte Demontage des Stellantriebs zu Austauschzwecken ohne die Notwendigkeit eines Ausbaus der gesamten Klappe gewährleistet. Bei der Montage von der Stirnseite her können die Klappe und der Stellantrieb auch derart ausgebildet sein, dass der Stellantrieb schräggestellt über den Klappenkörper geschoben und dann durch eine Schwenkbewegung mit dem Klappenkörper verbunden wird. Dadurch ist zum Einsetzen des Stellantriebs weniger seitlicher Einbauraum erforderlich als bei einem Einsetzen in axialer Richtung der Klappe.

Bei einer bevorzugten Ausgestaltung kann der Motor des Stellantriebs drehfest mit dem Klappengehäuse verbindbar sein. Diese drehfeste Verbindung kann beispielsweise mittels eines Steckers erfolgen. Dadurch kann erreicht werden, dass auch die Zuleitungen zum Stellantrieb nicht mitrotieren, sondern ortsfest bezüglich des Klappengehäuses sind.

Ein weiterer Vorteil ergibt sich, wenn in den Motor ein Potentiometer integriert ist. Es lässt sich dann jederzeit die Klappenstellung bestimmen.

Eine weitere wichtige Anforderung an Verstellklappen von Klima-, Lüftungs- oder Heizungsanlagen ist, dass sie äußerst geräuscharm arbeiten müssen. Der Klimakomfort soll nicht auf Kosten des Geräuschkomforts erreicht werden. Besonders geräuscharme Antriebslösungen ergeben sich, wenn der Motor ein zwei-, drei- oder vierzähniges Antriebsritzel aufweist. Als Getriebe kann der Stellantrieb vorzugsweise ein Wolfrom-Getriebe mit mindestens einem Hohlrad mit unterschiedlicher Zähnezahl aufweisen. Wolfrom-Getriebe mit niedriger Zähnezahl zeichnen sich durch eine hohe Geräuscharmut aus.

Eine andere Möglichkeit besteht darin, den Stellantrieb mit einem mehrstufigen Planetengetriebe mit mindestens einem Sonnenrad mit ein, zwei, drei oder vier Zähnen auszustatten. Auch solche Planetengetriebe sind ausgesprochen geräuscharm und erreichen dennoch - ebenso wie Wolfrom-Getriebe - die erforderlichen hohen Drehmomente bis 40 Ncm, auch bei Verwendung sehr kleiner Motoren.

Die hohe Leistungsdichte muss außerdem über eine Lebensdauer von 4,8 Millionen Zyklen gewährleistet sein. Auch diese Anforderung ist durch diese Wolfrom- und Planetengetriebe erfüllbar.

Als Antriebsmotor lassen sich ebenfalls verschiedene Motortypen einsetzen. So können beispielsweise Schrittmotoren, AC/DC-Motoren, Servomotoren, Piezo-Motoren, Penny-Motoren, elektronisch kommutierte Motoren, insbesondere elektronisch kommutierte Reluktanzmotoren oder Plus-Motoren eingesetzt werden.

Bei Verwendung kleiner Motoren in Verbindung mit den oben erwähnten Wolfrom- oder Planetengetrieben ergibt sich insgesamt ein sehr klein bauender Stellantrieb, der leicht in die Klappe integrierbar ist, geräuscharm arbeitet und die erforderlichen Leistungsmerkmale aufweist. Wesentlicher Punkt ist hierbei das Vorsehen nur weniger Zähne an den Sonnenrädern. Damit können mit wenigen Getriebestufen die erforderlichzen Drehmomente geräuscharm erzeugt werden. Wenige Getriebestufen bedeutet außerdem einen kleinen Einbauraum.

Die Klappe selbst lässt sich prinzipiell aus beliebigem Material herstellen. Eine besonders kostengünstige Variante ist die Herstellung der Klappe als Spritzgießteil aus Kunststoff. Darüber hinaus sind Kunststoffklappen relativ leicht und somit unter Aufbringung nur geringer Drehmomente zu verstellen.

Nachfolgend werden bevorzugte Ausführungsbeispiele erfindungsgemäßer Verstellklappen anhand der Zeichnungen näher beschrieben.

Es zeigen:
- Fig. 1: eine Draufsicht auf eine erste Ausführungsform einer Verstellklappe;
- Fig. 2: eine Seitenansicht der Verstellklappe aus Fig. 1 mit einem Stellantrieb kurz vor dem Einsetzen;
- Fig. 3: eine perspektivische Ansicht eines zweiten Ausführungsbeispiels einer Verstellklappe mit Stellantrieb;
- Fig. 4a, b: zwei Querschnitte durch Planetengetriebe eines Stellantriebs einer Verstellklappe;
- Fig. 5a, b: Querschnitte durch zwei zweistufige Planetengetriebe eines Stellantriebs für eine Verstellklappe;
- Fig. 6a, b: Querschnitte durch zwei zweistufige Planetengetriebe mit Sonnen- und Hohlrad eines Stellantriebs einer Verstellklappe;
- Fig. 7a, b: Querschnitte durch zwei weitere zweistufige Planetengetriebe eines Stellantriebs einer Verstellklappe;
- Fig. 8a, b, c: Querschnitte durch drei Wolfrom-Getriebe eines Stellantriebs einer Verstellklappe;
- Fig. 9: einen Querschnitt durch ein weiteres Wolfrom-Getriebe eines Stellantriebs für eine Verstellklappe.

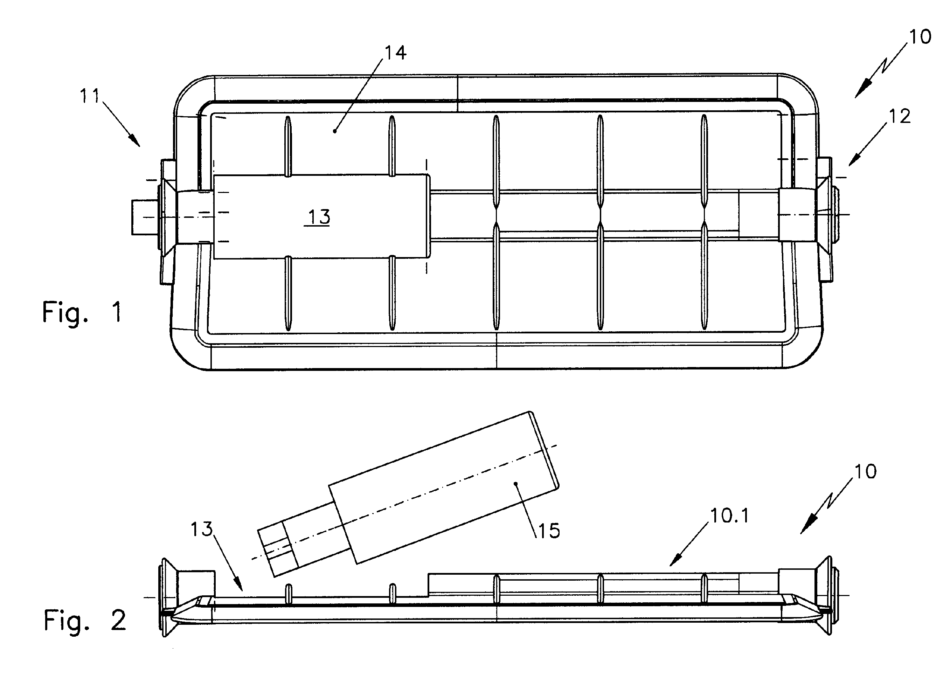

Fig. 1 zeigt in der Draufsicht eine Verstellklappe 10 einer nicht weiter dargestellten Heizungs-, Lüftungs- oder Klimaanlage. Die Verstellklappe 10 weist benachbart zu einem ihrer Lager 11, 12 ein Fenster 13 zur Aufnahme eines Stellantriebs für die Klappe 10 auf. Das Fenster 13 ist dabei von vier Seiten vom Körper 14 der Verstellklappe 10 umschlossen. Der Aufbau der Verstellklappe 10 ist daher trotz des Fensters 13 sehr stabil. Fig. 2 zeigt nun, wie in die Verstellklappe 10 ein Stellantrieb 15 zur Neigungsverstellung der Verstellklappe 10 in das Fenster 13 einsetzbar ist. Dazu wird der Stellantrieb 15 von der Oberseite 10.1 der Klappe 10 her schräg in das Fenster 13 eingeführt und dabei mit der Klappe 10 verrastet.

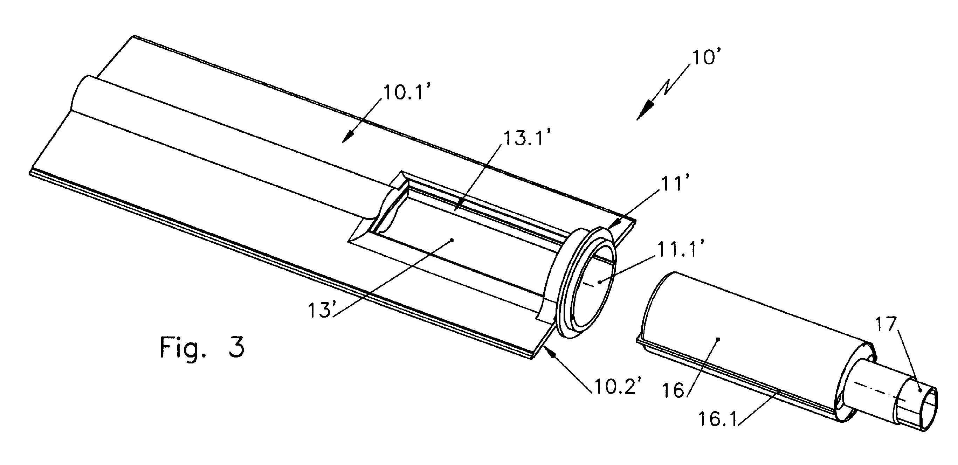

Fig. 3 zeigt eine alternative Ausgestaltung einer Verstellklappe 10', die ebenfalls mit einem Fenster 13' versehen ist. Hier ist jedoch der Stellantrieb 15' für die Klappe 10' nicht von der Oberseite 10.1' der Klappe 10', sondern von der Stirnseite 10.2' her in das Fenster 13' einsetzbar. Die Kopplung des Stellantriebs 15' mit der Klappe 10' erfolgt über Vorsprünge 16.1 am Gehäuse 16 des Stellantriebs 15'. Die Vorsprünge 16.1 werden in Nuten 13.1' in der Berandung des Fensters 13' eingeführt. Die Stromversorgung des im Stellantriebs 15' enthaltenen, hier nicht dargestellten Motors erfolgt über einen Stecker 17, der ortsfest mit einem hier nicht dargestellten Gehäuse der Verstellklappe 10' verbunden ist. Das Gehäuse 16 dagegen rotiert gemeinsam mit der Klappe 10'. Durch die ortsfeste Anordnung des Steckers 17 ist auch die elektrische Kontaktierung des Motors stationär, also nicht rotierend, sodass keine Kontaktprobleme auftreten können.

Das Lager 11' bildet mit der Klappe 10' eine Einheit und verhindert, dass die Klappe 10' nach der Demontage des Stellantriebs 15' nach unten fällt. Es hält die Klappe 10' auch ohne den Stellantrieb 15' in Position. Dabei kann der Durchmesser des Lagerrings 11.1' so groß gewählt werden, dass der Stellantrieb 15' auch schräg durch ihn hindurchgeführt werden kann. Nach vollständigem Einführen kann der Stellantrieb 15' dann durch eine Schwenkbewegung mit der Klappe 10' verrastet werden.

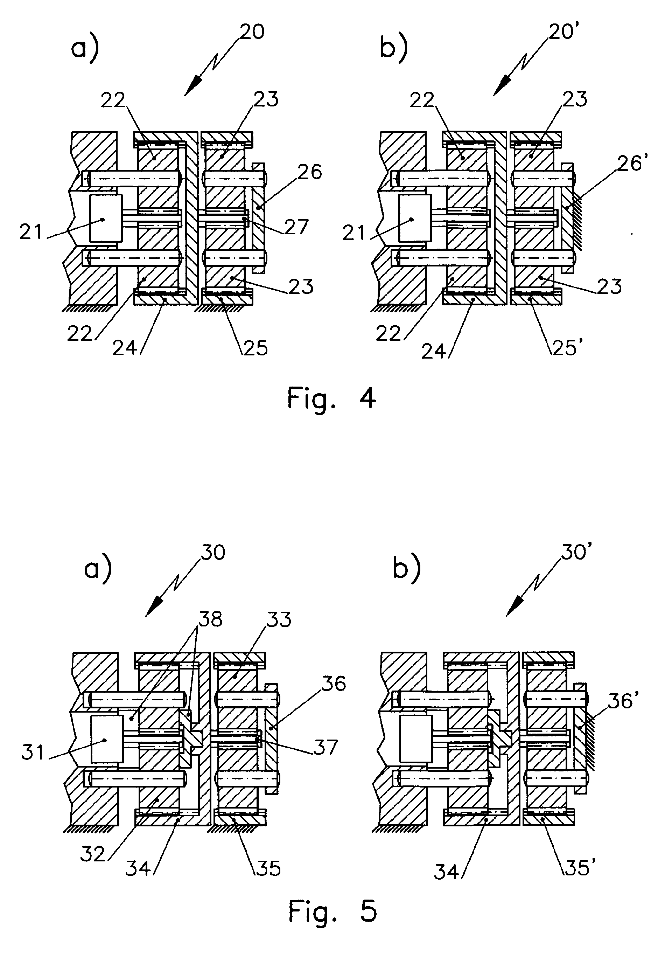

Die Figuren 4 bis 9 zeigen nun verschiedene Möglichkeiten der Ausgestaltung eines Getriebes für die Stellantriebe 15, 15', die sich alle durch eine hohe Leistungsdichte und eine äußerst geringe Geräuschentwicklung auszeichnen.

Fig. 4 zeigt zwei zweistufige Planetengetriebe 20 bzw. 20', wobei beide Getriebevarianten 20, 20' nach den Fig. 4a, b ein Sonnenrad 21 und Planetenräder 22, 23 aufweisen. Die Planetenräder 22 der ersten Stufe sind dabei in einem Hohlrad 24 angeordnet, das fest mit dem Sonnenrad 27 verbunden ist. Die Sonnenräder 21 weisen zwei, drei oder vier Zähne auf. Die Planetenräder 22, die vom Sonnenrad 21 angetrieben werden, rotieren gehäusefest um ihre eigene Achse und treiben das Hohlrad 24 an. Auch die Planetenräder 23, die vom Hohlrad 24 angetrieben werden, laufen in einem Hohlrad 25 um, wobei dieses beim Getriebe 20 nach Fig. 4a mit dem Gehäuse des Stellantriebs fest verbunden ist, was durch die Schraffur angedeutet ist. Bei der Variante in Fig. 4b ist dagegen das Hohlrad 25' nicht mit dem Gehäuse verbunden, dafür aber ein die Achsen der Planetenräder 23 verbindender Steg 26'. Dies bedeutet, dass bei der Getriebevariante aus Fig. 4b der Abtrieb über das Hohlrad 25' erfolgt, während er bei der Getriebevariante aus Fig. 4a über den dort nicht mit dem Gehäuse verbundenen Steg 26, der die beiden Planetenräder 23 miteinander verbindet, erfolgt.

Fig. 5 zeigt in den Ansichten a und b zweistufige Planetengetriebe 30, 30', die im Prinzip den Planetengetrieben 20, 20' aus Fig. 4 entsprechen, mit dem Unterschied, dass hier das Hohlrad 34 in einem gehäusefesten Lager 38 geführt ist. Außerdem ist hier ein zweites Sonnenrad 37 vorgesehen, das fest mit dem Hohlrad 34 verbunden ist. Das Sonnenrad 37 treibt die Planetenräder 33 an. Das Hohlrad 35 ist gehäusefest, wodurch der Abtrieb über einen Steg 36 in Fig. 5a erfolgt. Dagegen ist das Hohlrad 35' in Fig. 5b nicht ortsfest, sondern der Steg 36', sodass bei der Getriebevariante nach Fig. 5b der Abtrieb über das Hohlrad 35' erfolgt.

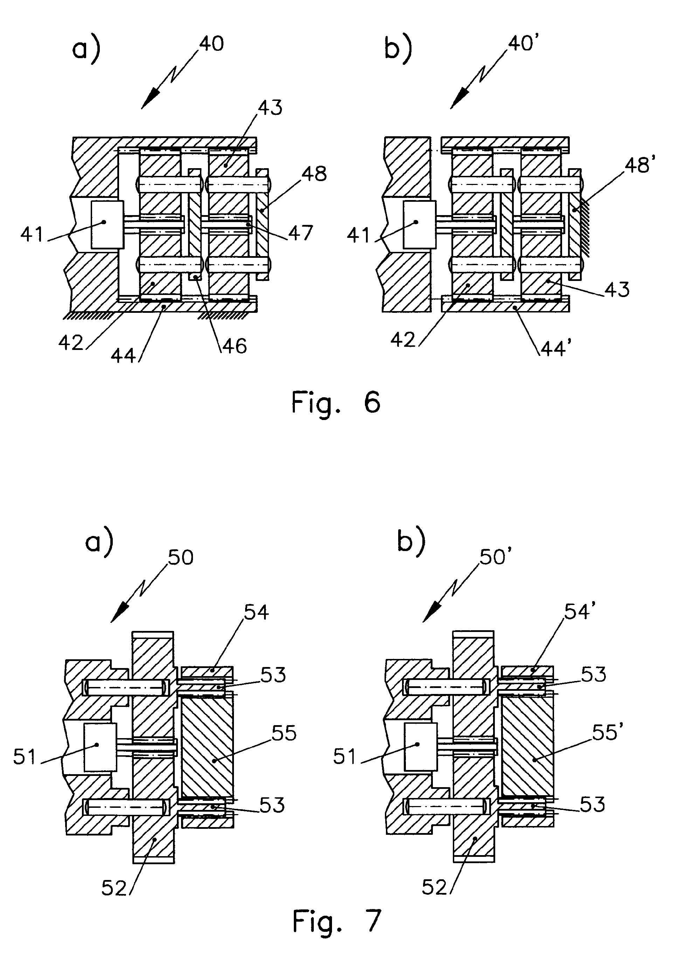

Fig. 6 a, b zeigt zwei weitere Varianten von zweistufigen Planetengetrieben 40 und 40' mit einem Sonnenrad 41, das sehr wenige Zähne, beispielsweise zwei, drei oder vier Zähne, aufweist. Beim Getriebe 40 nach Fig. 6a ist ein Hohlrad 44 vorgesehen, das fest mit dem Gehäuse des Stellantriebs verbunden ist. Die Planetenräder 42 treiben beim Getriebe 40 über einen Steg 46 ein Ritzel 47 an, das mit dem Steg 46 fest verbunden ist. Dieses Ritzel 47 treibt zwei weitere Planetenräder 43 an, die ihrerseits einen Steg 48 antreiben, der gleichzeitig der Abtrieb ist.

Beim Getriebe 40' nach Fig. 6b ist der Steg 48' feststehend, während das Hohlrad 44' sich dreht und den Abtrieb bildet.

In den Figuren 7a, b sind nochmals zwei Varianten zweistufiger Planetengetriebe 50 und 50' gezeigt. Ein Sonnenrad 51 mit zwei, drei oder vier Zähnen treibt zwei gehäusefest gelagerte Planetenräder 52 an. Die Planetenräder 52 ihrerseits treiben sehr dünne Planetenräder 53 der zweiten Stufe an. Zwischen den Planetenrädern 53 ist beim Getriebe nach Fig. 7a ein Stützrad 55 vorgesehen, das ein Durchbiegen der dünnen Ritzel 53 verhindert. Der Abtrieb erfolgt beim Getriebe 50 nach Fig. 7a über ein Hohlrad 54. Bei der Getriebevariante 50' nach Fig. 7b erfolgt der Abtrieb hingegen über das Rad 55', während das Hohlrad 54' als Stützrad fungiert.

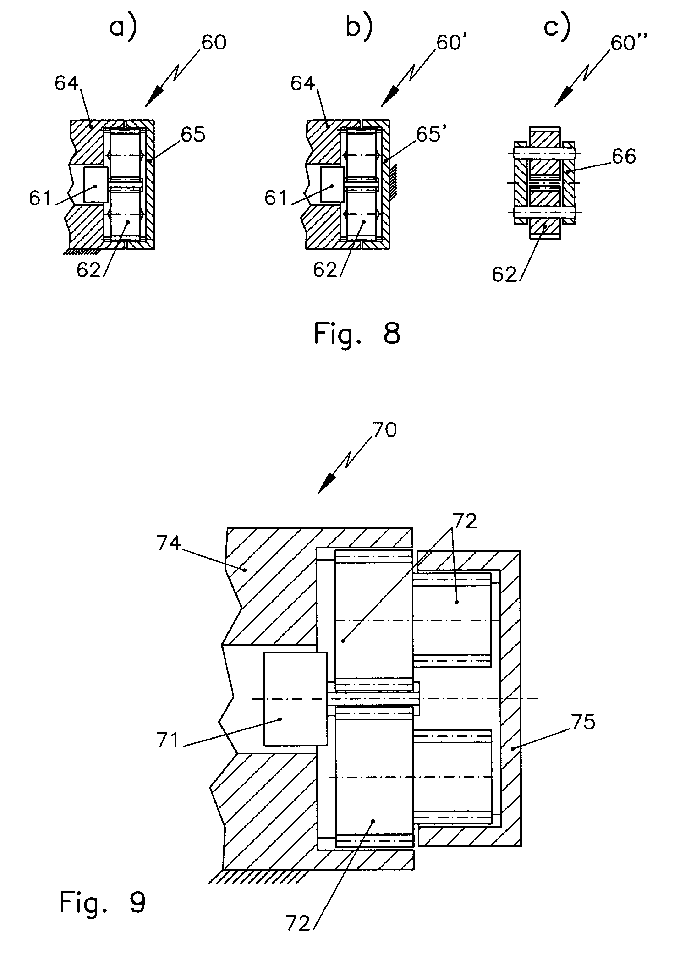

In Fig. 8 sind drei Getriebe 60, 60' und 60" nach dem Wolfrom-Prinzip gezeigt. Die Getriebe 60 und 60' weisen zwei Hohlräder 64 und 65 bzw. 65' auf. Eines davon, im Beispiel nach Fig. 8a das Hohlrad 65 und im Beispiel nach Fig. 8b das Hohlrad 64, ist das Abtriebsrad. Die Hohlräder 64 und 65 weisen vorzugsweise eine Zähnezahldifferenz von mindestens 1 auf. Die Planetenräder 62, die von einem Sonnenrad 61 angetrieben sind, sind miteinander gekoppelt und weisen die gleiche oder unterschiedliche Zähnezahl auf. Das Getriebe 60" in Fig. 8c zeigt, dass die Planetenräder 62 auch durch einen Steg 66 fixiert werden können.

Fig. 9 zeigt ein weiteres Wolfrom-Getriebe 70 mit zwei Hohlrädern 74 und 75 unterschiedlichen Durchmessers. Ein Sonnenrad 71 treibt zwei gestufte Planetenräder 72 an. Das Hohlrad 75 ist das Abtriebsrad, das Hohlrad 74 ist gehäusefest.

## Patentansprüche

1. Verstellklappe für Heizungs-, Lüftungs- und Klimaanlagen, insbesondere für Kraftfahrzeuge, mit einem Stellantrieb (15, 15'), der in die Verstellklappe (10, 10') integriert ist, **dadurch gekennzeichnet, dass** der Klappenkörper (14) eine fensterartige Aussparung (13, 13') aufweist, in die der Stellantrieb (15, 15') einsetzbar ist.

2. Verstellklappe nach Anspruch 1, **dadurch gekennzeichnet, dass** der Stellantrieb (15') in einem separaten, in die Aussparung (13, 13') einsetzbaren Gehäuse (16) angeordnet ist.

3. Verstellklappe nach Anspruch 2, **dadurch gekennzeichnet, dass** im Gehäuse (16) mindestens ein Motor und ein Getriebe (20, 20', 30, 30', 40, 40', 50, 50', 60, 60', 70) angeordnet sind.

4. Verstellklappe nach Anspruch 2 oder 3, **dadurch gekennzeichnet, dass** eine Positionierelektronik des Stellantriebs (15, 15') und/oder eine Buselektronik in das Gehäuse (16) integriert ist.

5. Verstellklappe nach einem der Ansprüche 1 bis 4, **dadurch gekennzeichnet, dass** der Stellantrieb (15) in die Aussparung (13) einrastbar ist.

6. Verstellklappe nach einem der Ansprüche 1 bis 5, **dadurch gekennzeichnet, dass** der Stellantrieb (15, 15') von der Klappenober- oder -unterseite (10.1, 10.1') her in die Aussparung einsetzbar ist.

7. Verstellklappe nach einem der Ansprüche 1 bis 6, **dadurch gekennzeichnet, dass** der Stellantrieb (15') von einer der Stirnseiten (10.2') der Klappe (10') in die Aussparung (13') einsetzbar ist.

8. Verstellklappe nach Anspruch 7, **dadurch gekennzeichnet, dass** der Stellantrieb (15') von der Stirnseite (10.2') der Klappe (10') her schräggestellt über den Klappenkörper schiebbar und durch eine Schwenkbewegung in die Aussparung (13') einsetzbar und mit dem Klappenkörper verbindbar ist.

9. Verstellklappe nach einem der Ansprüche 1 bis 8, **dadurch gekennzeichnet, dass** der Motor des Stellantriebs (15, 15') drehfest mit dem Klappengehäuse verbindbar ist.

10. Verstellklappe nach Anspruch 9, **dadurch gekennzeichnet, dass** der Motor mittels eines Steckers (17) drehfest mit dem Klappengehäuse verbindbar ist.

11. Verstellklappe nach einem der Ansprüche 3 bis 10, **dadurch gekennzeichnet, dass** in den Motor ein Potentiometer integriert ist.

12. Verstellklappe nach einem der Ansprüche 1 bis 11, **dadurch gekennzeichnet, dass** der Motor ein zwei, drei- oder vierzähniges Antriebsritzel aufweist.

13. Verstellklappe nach einem der Ansprüche 1 bis 12, **dadurch gekennzeichnet, dass** der Stellantrieb (15, 15') ein Wolfrom-Getriebe (60, 60', 60", 70) mit mindestens einem Hohlrad (64, 65, 65', 74, 75) mit unterschiedlicher Zähnezahl aufweist.

14. Verstellklappe nach Anspruch 13, **dadurch gekennzeichnet, dass** es zwei Planetenräder (62, 72) aufweist.

15. Verstellklappe nach einem der Ansprüche 1 bis 12, **dadurch gekennzeichnet, dass** der Stellantrieb (15, 15') ein mehrstufiges Planetengetriebe (20, 20', 30, 30', 40, 40', 50, 50') mit mindestens einem Sonnenrad (21, 31, 41, 51, 27, 37, 47) mit ein, zwei, drei oder vier Zähnen aufweist.

16. Verstellklappe nach einem der Ansprüche 1 bis 15, **dadurch gekennzeichnet, dass** der Motor ein Schrittmotor, ein AC/DC-Motor, ein Servomotor, ein Piezomotor, ein Penny-Motor, ein elektronisch kommutierter Motor, insbesondere ein elektronisch kommutierter Reluktanzmotor oder ein Plus-Motor ist.
